# EUROPEAN PATENT SPECIFICATION

(11) **EP 3 804 821 B1**
(45) Date of publication and mention of the grant of the patent: **31.01.2024**
(21) Application number: 19201947.9
(22) Date of filing: 08.10.2019
(51) Int. Cl.: A63B 22/06, G01L 3/00, G01L 3/10

(54) **TORQUE MEASURING DEVICE FOR A FLYWHEEL**
DREHMOMENTMESSVORRICHTUNG FÜR EIN SCHWUNGRAD
DISPOSITIF DE MESURE DE COUPLE POUR UN VOLANT

(43) Date of publication of application: 14.04.2021
(73) Proprietor: PELOTON INTERACTIVE TAIWAN, INC., Taipei City (TW)
(72) Inventor: WU, Mu-Chuan, Tainan City (TW)
(74) Representative: Celona, Antonio

(56) References cited:
- CN-U- 203 111 433
- CN-U- 206 049 956
- US-A1- 2018 102 695
- US-A1- 2018 292 276

## Description

### 1. Field of the Invention

The present invention relates to a torque measuring device for a flywheel, and more particularly to a torque measuring device that is used in measuring torque of a flywheel.

### 2. Description of Related Art

To perform physical training without being affected by outdoor weather, people will ride exercise bikes indoors for physical training.

An exercise bike has a frame, a flywheel, a resistance adjusting assembly, and a transmission mechanism. The flywheel is rotatably mounted on the frame. The resistance adjusting assembly is mounted on the frame and used for providing resistance to the flywheel. The transmission mechanism is connected to the flywheel through a belt or a chain. In the first place, a user can pedal the transmission mechanism to rotate the flywheel, and adjust the resistance adjusting assembly to provide the resistance to the flywheel according to his physical condition and training demand, to achieve the effect of fitness and training.

To measure exercise status of the user when using the exercise bike, a conventional torque measuring device is mounted on a shaft that is for mounting the flywheel and measures rotation of the flywheel when the flywheel rotates, so as to calculate output power of the user. Wherein, the conventional torque measuring device comprises a magnet fixed on the shaft and a measuring assembly. The measuring assembly has a sleeve, multiple measuring apparatuses, a transmission member, and a housing. The sleeve is mounted around the shaft. The multiple measuring apparatuses are disposed on and arranged around an outer circumferential surface of the sleeve. The transmission member is assembled to an end of the sleeve and connected to the belt or the chain of the transmission mechanism. The housing is mounted on an outside of the sleeve and fixed on the flywheel.

When the user pedals, the transmission mechanism simultaneously drives the transmission member of the measuring assembly and the flywheel to rotate, thereby causing relative rotation of the magnet fixed on the shaft and the measuring apparatuses of the measuring assembly, such that torque can be measured. However, due to the way to assemble the sleeve, the transmission member, and the housing of the measuring assembly, structure of the conventional torque measuring device is complicated, such that it is inconvenient to assemble the conventional torque measuring device. Moreover, when the transmission mechanism drives the transmission member to rotate, the sleeve, the transmission member, and the housing may rotate relative to each other, thereby affecting accuracy of the torque measured by the conventional torque measuring device.

In addition, another conventional torque measuring device for a flywheel is also disclosed in US 2018/292276 A1. The conventional torque measuring device is adapted to be mounted on a frame of an exercise bike which has the flywheel, a wheel shaft mounted through the flywheel, and a transmission mechanism driving the flywheel. The torque measuring device is adapted to be connected to the flywheel, the wheel shaft, and the transmission mechanism, and has a base, a measuring assembly, a communication module, and a power module. The base has a combination portion, a connection portion, and a transmission portion. The measuring assembly is mounted on the wheel shaft and the base and has a magnet and multiple torque measuring apparatuses. The communication module is mounted on the base. The power module is mounted on the base.

The main objective of the invention is to provide a torque measuring device for a flywheel to solve the problem that the conventional torque measuring device is complicated in structure, is inconvenient for assembling, and is inaccurate in measuring torque.

The torque measuring device is mounted on a frame of an exercise bike which has a flywheel, a wheel shaft mounted through the flywheel, and a transmission mechanism driving the flywheel. The torque measuring device connects the flywheel, the wheel shaft, and the transmission mechanism. The torque measuring device comprises a base, a measuring assembly, a communication module, and a power module. The base is rotatably mounted on the wheel shaft and has a combination portion, a connection portion, and a transmission portion. The combination portion has a first side and a second side. The first side is fixed to the flywheel. The second side is opposite to the first side. The connection portion is attached to the first side of the combination portion and has an outer peripheral surface. The transmission portion is disposed next to the connection portion and connected to the transmission mechanism.

The measuring assembly is mounted on the wheel shaft and the base and has a magnet and multiple torque measuring apparatuses. The magnet is mounted on the wheel shaft. The multiple torque measuring apparatuses are mounted on and arranged around the outer peripheral surface of the connection portion of the base.

The communication module is mounted on the second side of the combination portion of the base. The communication module receives and outputs measurement data measured by the measuring assembly.

The power module is mounted on the second side of the combination portion of the base and provides electricity to the communication module and the multiple torque measuring apparatuses.

Therefore, the torque measuring device in accordance with the present invention has the following advantages.
1. Convenience of assembly and maintenance: as the measuring assembly, the communication module, and the power module are mounted on the base, and the base can be directly assembled on the exercise bike, installation convenience can be improved. Moreover, the communication module and the power module are mounted on the second side of the combination portion and are exposed without being shielded so that ease in maintenance can be facilitated.
2. Increasing the torque force measurement accuracy: since the measuring assembly, the communication module, and the power module are mounted on the base, the transmission mechanism can drive the base to rotate by direct transmission so that the multiple torque measuring apparatuses located on the base can rotate simultaneously along with the base. Influence of the assembly tolerance between components during the process of the torque measurement can be avoided, and accordingly, the accuracy of the torque measurement can be improved.

The present invention relates to a torque measuring device according to claim 1.

### IN THE DRAWINGS:

Fig. 1 is an operational perspective view of a torque measuring device for a flywheel in accordance with the present invention, shown mounted on an exercise bike;
Fig. 2 is a perspective view of the torque measuring device in Fig. 1;
Fig. 3 is an exploded perspective view of the torque measuring device in Fig. 2;
Fig. 4 is another perspective view of the torque measuring device in Fig. 2;
Fig. 5 is a side view of the torque measuring device in Fig. 2;
Fig. 6 is a cross-sectional side view along line 6-6 in Fig. 5;
Fig. 7 is a block diagram of the torque measuring device in Fig. 2, showing a measuring assembly, a communication module, and a power module.

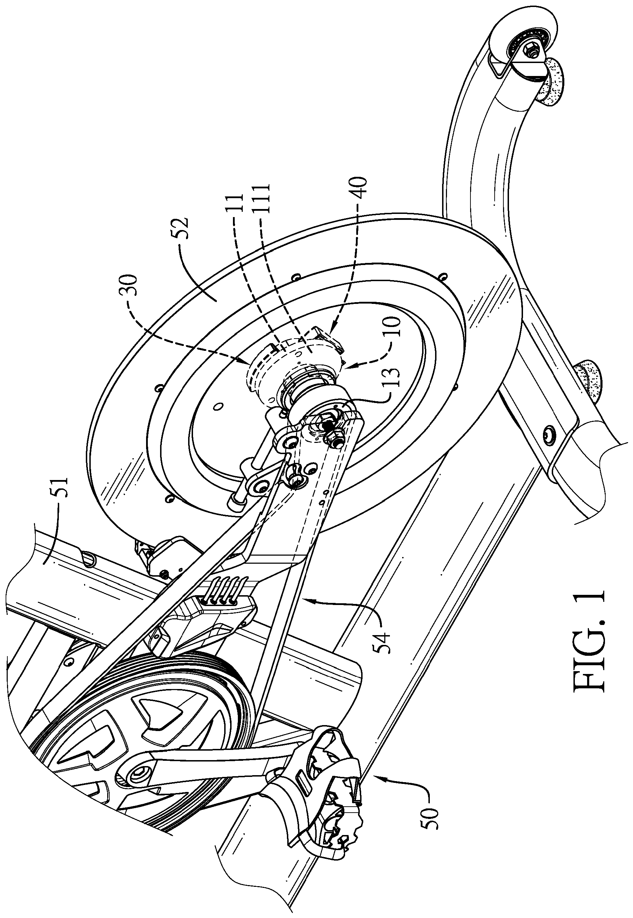

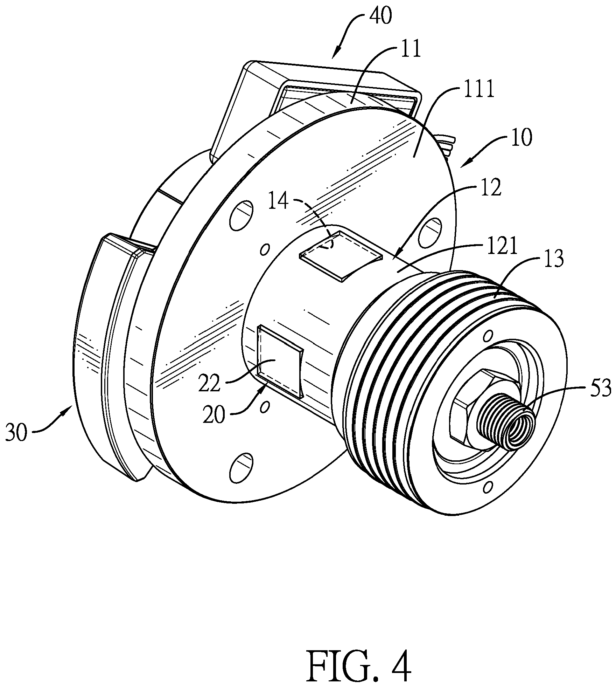

With reference to Figs. 1 to 4, a torque measuring device for a flywheel in accordance with the present invention is used on a frame 51 of an exercise bike 50 which has the flywheel 52, a wheel shaft 53 mounted through the flywheel 52, and a transmission mechanism 54 driving the flywheel 52. The torque measuring device is connected to the flywheel 52, the wheel shaft 53, and the transmission mechanism 54. The torque measuring device comprises a base 10, a measuring assembly 20, a communication module 30, and a power module 40.

With reference to Figs. 1, 2, and 4, the base 10 is rotatably mounted on the wheel shaft 53 and has a combination portion 11, a connection portion 12, and a transmission portion 13. The combination portion 11 has a first side 111 and a second side 112. The first side 111 is fixed to the flywheel 52. The second side 112 is opposite to the first side 111. The connection portion 12 is attached to the first side 111 of the combination portion 11 and has an outer peripheral surface 121. The transmission portion 13 is disposed next to the connection portion 12 and connected to the transmission mechanism 54. Specifically, the base 10 has multiple mounting recesses 14 formed in and arranged around the outer peripheral surface 121 of the connection portion 12.

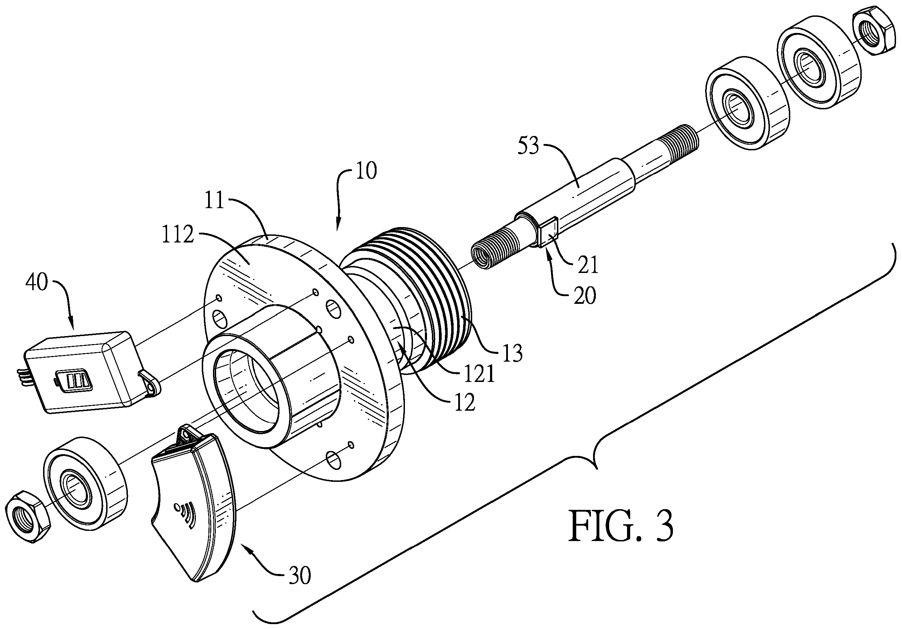

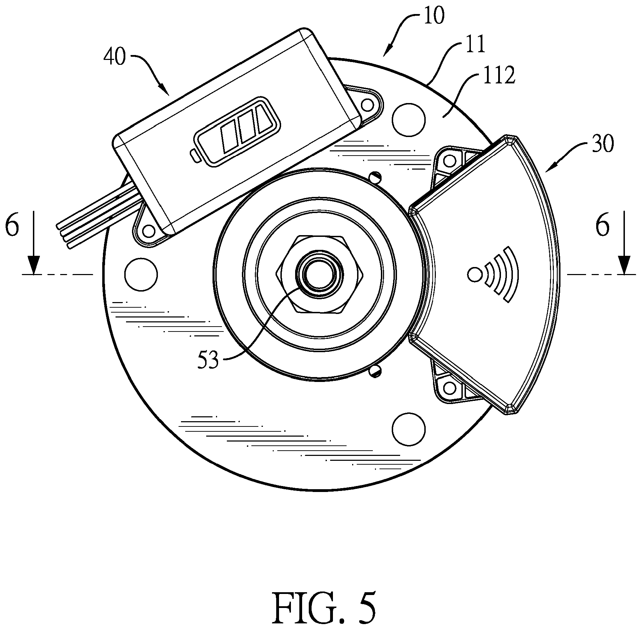

With reference to Figs. 3 to 6, the measuring assembly 20 is mounted on the wheel shaft 53 and the base 10. The measuring assembly 20 has a magnet 21 and multiple torque measuring apparatuses 22. The magnet 21 is mounted on the wheel shaft 53. The multiple torque measuring apparatuses 22 are mounted on and arranged around the outer peripheral surface 121 of the connection portion 12 of the base 10. The multiple torque measuring apparatuses 22 are mounted in the mounting recesses 14 respectively.

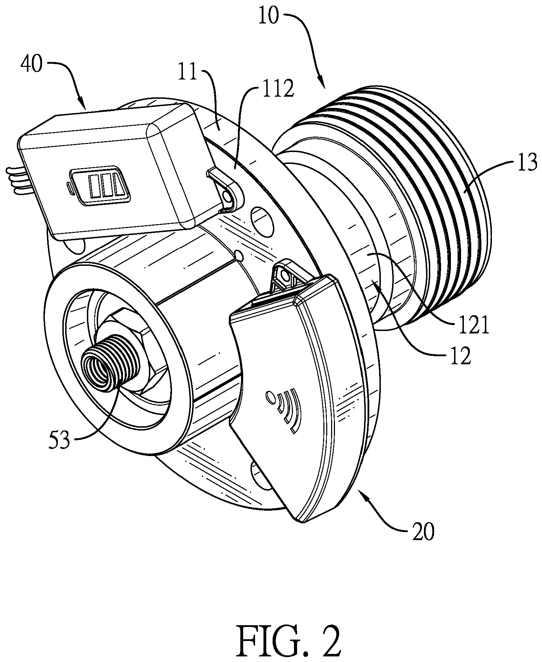

With reference to Figs. 2, 6, and 7, the communication module 30 is mounted on the second side 112 of the combination portion 11 of the base 10 and receives and outputs measurement data measured by the measuring assembly 20. The communication module 30 has an information processing component 31 and a wireless transmission component 32. The information processing component 31 receives the measurement data which is measured by the measuring assembly 20 and converts the measurement data into torque data. The wireless transmission component 32 outputs the torque data.

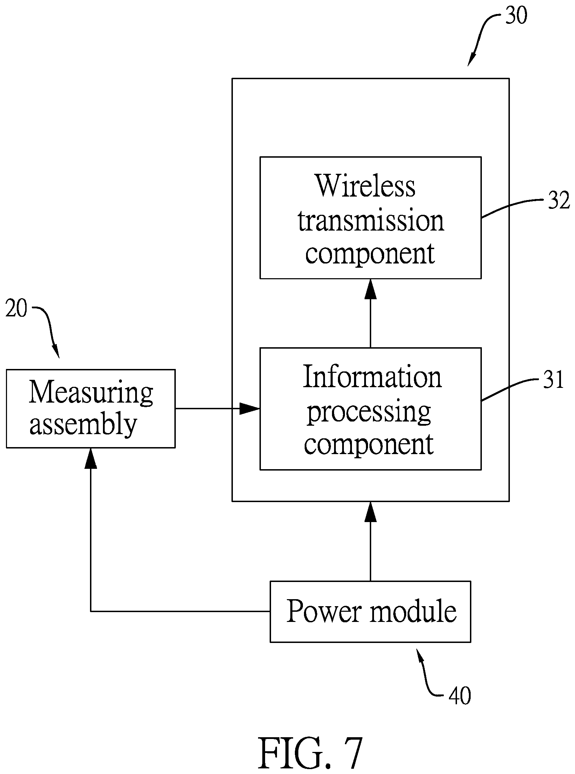

With reference to Figs. 2 and 7, the power module 40 is mounted on the second side 112 of the combination portion 11 of the base 10 and provides electricity to the communication module 30 and the multiple torque measuring apparatuses 22. The power module 40 has a battery and a battery case capable of accommodating the battery.

When the torque measuring device is in use, with reference to Figs. 1, 6, and 7, the transmission mechanism 54 of the exercise bike 50 directly drives the base 10 to rotate and allow the flywheel 52 to rotate relative to the wheel shaft 53 along with the base 10. Meanwhile, the torque measuring apparatuses 22 on the base 10 rotate relative to the magnet 21 on the wheel shaft 53. The multiple torque measuring apparatuses 22 obtain the measurement data by detecting a magnetic change with the magnet 21. The communication module 30 receives the measurement data from the multiple torque measuring apparatuses 22 and wirelessly outputs the measurement data.

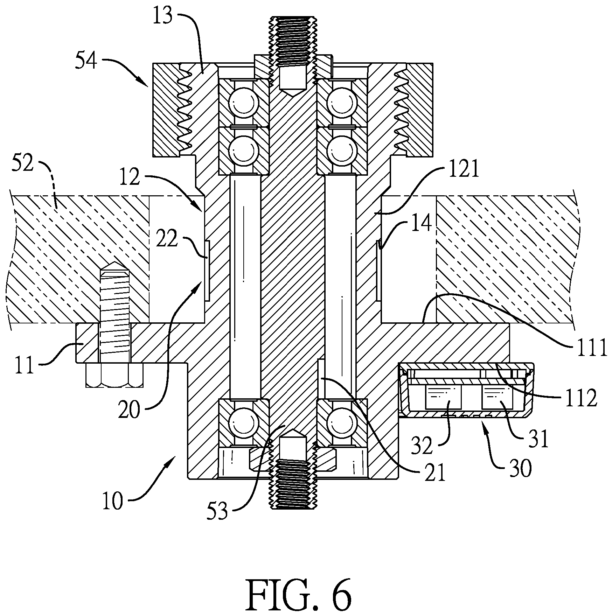

With reference to Figs. 1 and 6, in the torque measuring device in accordance with the present invention, the multiple torque measuring apparatuses 22 of the measuring assembly 20, the communication module 30, and the power module 40 are set on the base 10 and the base 10 is directly assembled with the flywheel 52, the wheel shaft 53, and the transmission mechanism 54 of the exercise bike 50. When installing the torque measuring device, the user just needs to dispose the wheel shaft 53 of the exercise bike 50 through the base 10 and fix the wheel shaft 53 on the frame 51. Then, the flywheel 52 is fixed on the combination portion 11 of the base 10, and the transmission mechanism 54 of the exercise bike 50 is connected to the transmission portion 13 of the base 10 by a belt or chain. The assembly work of the torque measuring device is completed easily.

With further reference to Figs. 2 and 6, since the communication module 30 and the power module 40 are mounted on the second side 112 of the combination portion 11, the communication module 30 and the power module 40 are exposed without being shielded. When the battery in the power module 40 runs out of power or is dead, or when the communication module 30 needs to be repaired, the user can replace the battery in the power module 40 or repair the communication module 30 without disassembling the base 10.

With reference to Figs. 1 and 6, since the transmission mechanism 54 directly drives the base 10 to rotate, the multiple torque measuring apparatuses 22 located on the base 10 can rotate simultaneously with the base 10. Through the direct transmission, the torque measurement of the torque measuring device is well prevented from being affected by the assembly tolerances between components and the accuracy of the torque measurement is improved.
Accordingly, in the torque measuring device of the present invention, with the simplified structure that the measuring assembly 20, the communication module 30, and the power module 40 are mounted on the base 10, the user can directly assemble the torque measuring device on the exercise bike 50 to improve installation convenience and facilitate inspection or replacement. In addition, the transmission mechanism 54 can drive the base 10 to rotate by direct transmission so that the multiple torque measuring apparatuses 22 located on the base 10 can rotate simultaneously along with the base 10. Influence of the assembly tolerance between components during the process of the torque measurement can be avoided, and accordingly, the accuracy of torque measurement can be improved.

## Claims

1. A torque measuring device for a flywheel, the torque measuring device adapted to be mounted on a frame (51) of an exercise bike (50) which has the flywheel (52), a wheel shaft (53) mounted through the flywheel (52), and a transmission mechanism (54) driving the flywheel (52), the torque measuring device adapted to be connected to the flywheel (52), the wheel shaft (53), and the transmission mechanism (54), and the torque measuring device comprising:
a base (10) rotatably mounted on the wheel shaft (53) and having
a combination portion (11); and
a connection portion (12) attached to the combination portion (11) and having an outer peripheral surface (121); and
a transmission portion (13) disposed next to the connection portion (12) and connected to the transmission mechanism (54); and
a measuring assembly (20) mounted on the wheel shaft (53) and the base (10) and having
a magnet (21) mounted on the wheel shaft (53); and
multiple torque measuring apparatuses (22) mounted on and arranged around the outer peripheral surface (121) of the connection portion (12) of the base (10); and
a communication module (30) mounted on the combination portion (11) of the base (10) and receiving and outputting measurement data measured by the measuring assembly (20); and
a power module (40) mounted on the combination portion (11) of the base (10) and providing electricity to the communication module (30) and the multiple torque measuring apparatuses (22), and **characterized in that**:
the combination portion (11) has
a first side (111) fixed to the flywheel (52); and
a second side (112) opposite to the first side (111);
the connection portion (12) is attached to the first side (111) of the combination portion (11);
the communication module (30) is mounted on the second side (112) of the combination portion (11) without being shielded by the flywheel (52); and
the power module (40) is mounted on the second side (112) of the combination portion (11) without being shielded by the flywheel (52).

2. The torque measuring device as claimed in claim 1, wherein
the communication module (30) has
an information processing component (31) receiving the measurement data measured by the measuring assembly (20) and converting the measurement data into torque data; and
a wireless transmission component (32) outputting the torque data.

3. The torque measuring device as claimed in claim 1 or 2, wherein the power module (40) has a battery and a battery case capable of accommodating the battery.

4. The torque measuring device as claimed in claim 1 or 2 or 3, wherein the base (10) has multiple mounting recesses (14) formed in and arranged around the outer peripheral surface (121) of the connection portion (12), and the torque measuring apparatuses (22) are mounted in the mounting recesses (14) respectively.

## Patentansprüche

1. Eine Drehmomentmessvorrichtung für ein Schwungrad, wobei die Drehmomentmessvorrichtung dazu geeignet ist, an einem Rahmen (51) eines Heimtrainers (50) montiert zu werden, der das Schwungrad (52), eine durch das Schwungrad (52) hindurch montierte Radwelle (53) und einen das Schwungrad (52) antreibenden Getriebemechanismus (54) aufweist, wobei die Drehmomentmessvorrichtung dazu geeignet ist, mit dem Schwungrad (52), der Radwelle (53) und dem Getriebemechanismus (54) verbunden zu werden, aufweisend:
eine Basis (10), die drehbar auf der Radwelle (53) montiert ist und Folgendes aufweist,
einen Kombinationsabschnitt (11); und
einen Verbindungsabschnitt (12), der an dem Kombinationsabschnitt (11) angebracht ist und eine äußere Umfangsfläche (121) aufweist; und
einen Übertragungsabschnitt (13), der neben dem Verbindungsabschnitt (12) angeordnet ist und mit dem Getriebemechanismus (54) verbunden ist; und
eine Messanordnung (20), die auf der Radwelle (53) und der Basis (10) angebracht ist und aufweist
einen an der Radwelle (53) angebrachten Magneten (21); und
mehrere Drehmomentmessvorrichtungen (22), die an der äußeren Umfangsfläche (121) des Verbindungsabschnitts (12) der Basis (10) angebracht und um diese herum angeordnet sind; und
ein Kommunikationsmodul (30), das an dem Kombinationsabschnitt (11) der Basis (10) angebracht ist und von der Messanordnung (20) gemessene Messdaten empfängt und ausgibt; und
ein Leistungsmodul (40), das auf dem Kombinationsabschnitt (11) der Basis (10) montiert ist und das Kommunikationsmodul (30) und die Mehrfach-Drehmomentmessvorrichtungen (22) mit Strom versorgt, und **dadurch gekennzeichnet, dass**:
der Kombinationsabschnitt (11) hat
eine erste Seite (111), die an dem Schwungrad (52) befestigt ist; und
eine zweite Seite (112), die der ersten Seite (111) gegenüberliegt;
der Verbindungsabschnitt (12) an der ersten Seite (111) des Kombinationsabschnitts (11) angebracht ist;
das Kommunikationsmodul (30) an der zweiten Seite (112) des Kombinationsabschnitts (11) montiert ist, ohne durch das Schwungrad (52) abgeschirmt zu sein; und
das Leistungsmodul (40) an der zweiten Seite (112) des Kombinationsabschnitts (11) montiert ist, ohne durch das Schwungrad (52) abgeschirmt zu sein.

2. Eine Drehmomentmessvorrichtung, wie in Anspruch 1 beansprucht, wobei das Kommunikationsmodul (30) aufweist,
eine Informationsverarbeitungskomponente (31), die die von der Messanordnung (20) gemessenen Messdaten empfängt und die Messdaten in Drehmomentdaten umwandelt; und
eine drahtlose Übertragungskomponente (32), die die Drehmomentdaten ausgibt.

3. Eine Drehmomentmessgerät nach Anspruch 1 oder 2, wobei das Leistungsmodul (40) eine Batterie und ein Batteriegehäuse aufweist, das die Batterie aufnehmen kann.

4. Eine Drehmomentmessvorrichtung nach Anspruch 1 oder 2 oder 3, wobei die Basis (10) mehrere Montageaussparungen (14) aufweist, die in der äußeren Umfangsfläche (121) des Verbindungsabschnitts (12) ausgebildet und um diese herum angeordnet sind, und die Drehmomentmessvorrichtungen (22) jeweils in den Montageaussparungen (14) montiert sind.

## Revendications

1. Dispositif de mesure de couple pour un volant d'inertie, le dispositif de mesure de couple étant adapté pour être monté sur un cadre (51) d'un vélo d'exercice (50) qui a un volant d'inertie (52), un arbre de roue (53) monté à travers le volant d'inertie (52), et un mécanisme de transmission (54) entraînant le volant d'inertie (52), le dispositif de mesure de couple étant adapté pour être relié au volant d'inertie (52), à l'arbre de roue (53), et au mécanisme de transmission (54), et le dispositif de mesure de couple comprenant :
une base (10) montée de manière rotative sur l'arbre de roue (53) et présentant une partie de combinaison (11) ; et
une partie de connexion (12) fixée à la partie de combinaison (11) et présentant une surface périphérique externe (121) ; et
une partie de transmission (13) disposée à côté de la partie de connexion (12) et reliée au mécanisme de transmission (54) ; et
un ensemble de mesure (20) monté sur l'arbre de roue (53) et la base (10) et présentant
un aimant (21) monté sur l'arbre de roue (53) ; et
de multiples appareils de mesure de couple (22) montés sur la surface périphérique externe (121) de la partie de connexion (12) de la base (10) et disposés autour de celle-ci ; et
un module de communication (30) monté sur la partie de combinaison (11) de la base (10) et recevant et émettant des données de mesure mesurées par l'ensemble de mesure (20) ; et
un module de puissance (40) monté sur la partie de combinaison (11) de la base (10) et fournissant de l'électricité au module de communication (30) et aux multiples appareils de mesure de couple (22), et **caractérisé en ce que** :
la partie de combinaison (11) présente
un premier côté (111) fixé au volant d'inertie (52) ; et
un second côté (112) opposé au premier côté (111) ;
la partie de connexion (12) est fixée au premier côté (111) de la partie de combinaison (11) ;
le module de communication (30) est monté sur le second côté (112) de la partie de combinaison (11) sans être protégé par le volant d'inertie (52) ; et
le module de puissance (40) est monté sur le second côté (112) de la partie de combinaison (11) sans être protégé par le volant d'inertie (52).

2. Dispositif de mesure de couple selon la revendication 1, dans lequel
le module de communication (30) présente
un composant de traitement de l'information (31) recevant les données de mesure mesurées par l'ensemble de mesure (20) et convertissant les données de mesure en données de couple ; et
un composant de transmission sans fil (32) émettant les données de couple.

3. Dispositif de mesure de couple selon la revendication 1 ou 2, dans lequel le module de puissance (40) présente une batterie et un boîtier de batterie capable d'accueillir la batterie.

4. Dispositif de mesure de couple selon la revendication 1 ou 2 ou 3, dans lequel la base (10) présente de multiples évidements de montage (14) formés et disposés autour de la surface périphérique externe (121) de la partie de connexion (12), et les appareils de mesure de couple (22) sont montés dans les évidements de montage (14) respectivement.
